# EUROPEAN PATENT APPLICATION

(11) **EP 4 647 870 A1**
(43) Date of publication of application: **12.11.2025**
(21) Application number: 23920810.1
(22) Date of filing: 17.11.2023
(51) Int. Cl.: G06F 1/16

(54) **HOUSING AND ELECTRONIC DEVICE**

(30) Priority: 07.02.2023 CN 202310145274; 07.06.2023 CN 202310674065
(71) Applicant: Honor Device Co., Ltd., Shenzhen, Guangdong 518040 (CN)
(72) Inventor: FANG, Dongyu, Shenzhen, Guangdong 518040 (CN); WANG, Xiaoguang, Shenzhen, Guangdong 518040 (CN); ZHANG, Shaohui, Shenzhen, Guangdong 518040 (CN); CAO, Jiahe, Shenzhen, Guangdong 518040 (CN); HUO, Guoliang, Shenzhen, Guangdong 518040 (CN); LIU, Yang, Shenzhen, Guangdong 518040 (CN); YE, Jingang, Shenzhen, Guangdong 518040 (CN)
(74) Representative: Gill Jennings & Every LLP
(86) International application number: PCT/CN2023/132332
(87) International publication number: WO 2024/164618

(57) **Abstract**

Embodiments of this application provide a housing and an electronic device. The housing includes a metal plate, an intermediate layer, and a first textured layer that are arranged in a stack. The intermediate layer is located between the metal plate and the first textured layer. The intermediate layer includes acrylic resin having a weight percentage of at least 80%. According to the housing provided in embodiments of this application, the housing achieves a cool feeling of metal and an outer surface with a dazzling and textured but seamless appearance, which improves appearance richness and competitiveness of a product.

## Description

This application claims priority to Chinese Patent Application No. 202310145274.9, filed with the Chinese Patent Office on February 7, 2023 and entitled "HOUSING AND ELECTRONIC DEVICE", and to Chinese Patent Application No. 202310674065.3, filed with the China National Intellectual Property Administration on June 7, 2023 and entitled "HOUSING AND ELECTRONIC DEVICE", which are incorporated herein by reference in their entireties.

### TECHNICAL FIELD

This application relates to the technical field of terminals, and in particular, to a housing and an electronic device.

### BACKGROUND

An electronic device such as a tablet computer or a notebook computer has become inseparable from the life, which can be seen everywhere in life, and greatly improve living standards of people. In response to the rapid development of communication device technologies, a user puts forward a higher requirement on an appearance of the electronic device.

Currently, a metal housing is usually adopted for the tablet computer, and an anodic oxidation scheme is often adopted, resulting in severe homogenization and a relatively limited appearance effect. Some tablet computers also adopt the scheme of a glass fiber board, a composite board, and a PU skin. Although a high-level appearance is achieved, a cool feeling of metal is lost. In addition, a fit gap is introduced, and precision is reduced.

### SUMMARY

This application provides a housing and an electronic device. The housing achieves a cool feeling of metal and an outer surface with a dazzling and textured but seamless appearance, which improves appearance richness and competitiveness of a product.

According to a first aspect, this application provides a housing, including a metal plate, an intermediate layer, and a first textured layer that are arranged in a stack, where the intermediate layer is located between the metal plate and the first textured layer; and the intermediate layer includes acrylic resin having a weight percentage of at least 80%.

According to the housing provided in this application, the intermediate layer is arranged on a side of the metal plate, and the first textured layer is arranged on the intermediate layer. The intermediate layer is obtained by applying paint to a surface of a side of the metal plate and performing thermal curing. A composition of the paint includes acrylic resin. In other words, a composition of the intermediate layer includes the acrylic resin. The intermediate layer is used as a base layer (a primer layer) on a side of the metal plate. The intermediate layer is configured to improve adhesion of the textured layer to the metal surface and shielding a natural color of the metal surface of the metal plate. Through the metal plate, the intermediate layer, and the first textured layer that are arranged in a stack, the housing achieves a cool feeling of metal, and an outer surface of the housing has a dazzling and textured appearance, which improves appearance richness and competitiveness of a product. In addition, the metal plate, the intermediate layer, and the first textured layer are stacked to achieve seamless precision. Therefore, the housing provided in embodiments of this application resolves the problem in the related art that the housing cannot have the cool feeling of metal and the outer surface with the dazzling and textured but seamless appearance.

In a possible implementation, the acrylic resin is obtained through reaction of modified acrylic resin having a weight percentage in a range of 60% to 90% and polyester acrylic resin having a weight percentage in a range of 10% to 40%, and the modified acrylic resin includes silane-modified acrylic ester and/or hydroxypropyl-modified acrylic ester.

In a possible implementation, the intermediate layer further includes an additive, and the additive includes a colorant and a filler.

In a possible implementation, the intermediate layer is formed by: mixing the modified acrylic resin having a weight percentage in the range of 60% to 90%, the polyester acrylic resin having a weight percentage in the range of 10% to 40%, a curing agent, and the additive, applying a mixture to the metal plate, and performing thermal curing.

In a possible implementation, the housing further includes a first coating layer, where the first coating layer is located on a side of the first textured layer facing away from the intermediate layer.

In a possible implementation, the housing further includes a hardened layer and a first connecting layer, where the first connecting layer is located between the first coating layer and the hardened layer; and
the first connecting layer is configured to connect the first coating layer to the hardened layer.

In a possible implementation, the housing further includes a second textured layer, where the second textured layer is located between the first connecting layer and the hardened layer.

In a possible implementation, the housing further includes a second coating layer, where the second coating layer is located between the second textured layer and the hardened layer.

In a possible implementation, the housing further includes a second connecting layer, where the second connecting layer is located between the second coating layer and the hardened layer.

In a possible implementation, the first textured layer and the second textured layer both include a UV adhesive layer and a sheet with a texture structure, and the UV adhesive layer is made of an adhesive whose main body is polyurethane acrylic resin.

In a possible implementation, the hardened layer includes at least one of a UV textured layer with textures and a hard film layer without textures, and a hardness of the hardened layer is greater than a hardness of the first textured layer.

In a possible implementation, the first connecting layer and the second connecting layer each are an adhesion layer formed by any one of polyurethane, polyester, and epoxy resin.

In a possible implementation, a thickness of the intermediate layer is in a range of 10 µm to 35 µm.

In a possible implementation, a thickness of the second textured layer and the first textured layer is in a range of 10 µm to 25 µm.

In a possible implementation, a thickness of the hardened layer is in a range of 10 µm to 25 µm.

In a possible implementation, a thickness of the second coating layer and the first coating layer is in a range of 50 nm to 150 nm.

In a possible implementation, a thickness of the second connecting layer and the first connecting layer is in a range of 6 µm to 10 µm.

In a possible implementation, the first coating layer and the second coating layer include one or more of SiO, ZrO₂, Ti₃O₅, and SiO₂.

In a possible implementation, an outer edge of the housing has a chamfered plane.

In a possible implementation, the chamfered plane extends on all of the metal plate, the intermediate layer, and the first textured layer.

In a possible implementation, a corresponding thickness of the chamfered plane in the metal layer is greater than or equal to 0.5 mm and less than or equal to 3 mm.

According to a second aspect, this application provides an electronic device, including the housing according to any one of the above.

In a possible implementation, the electronic device includes a display screen and a middle frame, where the middle frame is arranged between the display screen and the housing, and a side of the metal plate of the housing facing away from the metal plate faces the middle frame.

In a possible implementation, the electronic device is a tablet computer.

### BRIEF DESCRIPTION OF DRAWINGS

FIG. 1 is a schematic diagram of an overall structure of an electronic device according to an embodiment of this application;
FIG. 2 is a schematic diagram of another overall structure of an electronic device according to an embodiment of this application;
FIG. 3 is a schematic structural exploded view of an electronic device according to an embodiment of this application;
FIG. 4A is a schematic structural exploded view of a housing;
FIG. 4B is a schematic structural exploded view of a housing according to an embodiment of this application;
FIG. 5 is another schematic structural exploded view of a housing according to an embodiment of this application;
FIG. 6 is still another schematic structural exploded view of a housing according to an embodiment of this application; and
FIG. 7 is a partial schematic structural diagram of a housing according to an embodiment of this application.

**Description of reference numerals:**

| | | | | | |
|---|---|---|---|---|---|
| 100- | Electronic device; | 100a- | Notebook computer; | 100b- | Tablet computer; |
| 110- | Rear housing; | 110a- | Housing; | | |
| 111- | Metal plate; | 112- | Intermediate layer; | 113- | First textured layer; |
| 114- | First coating layer; | 115- | First connecting layer; | 116- | Hardened layer; |
| 117- | Second textured layer; | 118- | Second coating layer; | 119- | Second connecting layer; |
| 120- | Display screen; | 130- | Middle frame; | 140- | Outer housing; |
| 150- | First housing; | 160- | Second housing; | 161- | Keyboard; |
| 170- | Chamfered plane; | 180- | Stacked structure. | | |

### DESCRIPTION OF EMBODIMENTS

Terms used in implementations of this application are only used for explaining specific embodiments of this application, and are not intended to limit this application. The implementations of embodiments of this application are described in detail below with reference to the accompanying drawings.

Unless the context requires otherwise, throughout the specification and claims, the term "comprise (comprise)" and other forms such as the third person singular "comprises (comprises)" and the present participle form "comprising (comprising)" are to be interpreted as open and inclusive, that is, "including, but not limited to". In the description of the specification, the term "one embodiment (one embodiment)", "some embodiments (some embodiments)", "exemplary embodiments (exemplary embodiments)", "example (example)", "some examples (some examples)", or the like are intended to indicate that specific features, structures, materials, or characteristics related to the embodiment or examples is included in at least one embodiment or example of the present disclosure. The schematic representations of the foregoing terms do not necessarily represent the same embodiment or example. Furthermore, the specific features, structures, materials, or characteristics may be included in any one or more embodiments or examples in any suitable manner.

In addition, in embodiments of this application, orientation terms such as "front" and "rear" are defined relative to the orientation of the components in the accompanying drawings. It should be understood that these directional terms are relative concepts, which are used for description and clarification relative to each other, and may be changed accordingly according to changes in the orientations of the components in the accompanying drawings.

In embodiments of this application, "and/or" is merely an association relationship for describing associated objects, and indicates that three relationships may exist. For example, A and/or B may represent three cases, which are only A exists, both A and B exist, and only B exists. In addition, a character "/" in this specification generally indicates an "or" relationship between the associated objects.

An embodiment of this application provides an electronic device. It may be understood that the electronic device may be a mobile terminal device such as a tablet computer, a mobile phone, a notebook computer, a personal digital assistant (Personal Digital Assistant, PDA), a smart wearable device, or a point of sales (Point of Sales, POS), or the electronic device may be a fixed terminal device such as a smart television, a router, a server, or a switch. This is not limited in this embodiment.

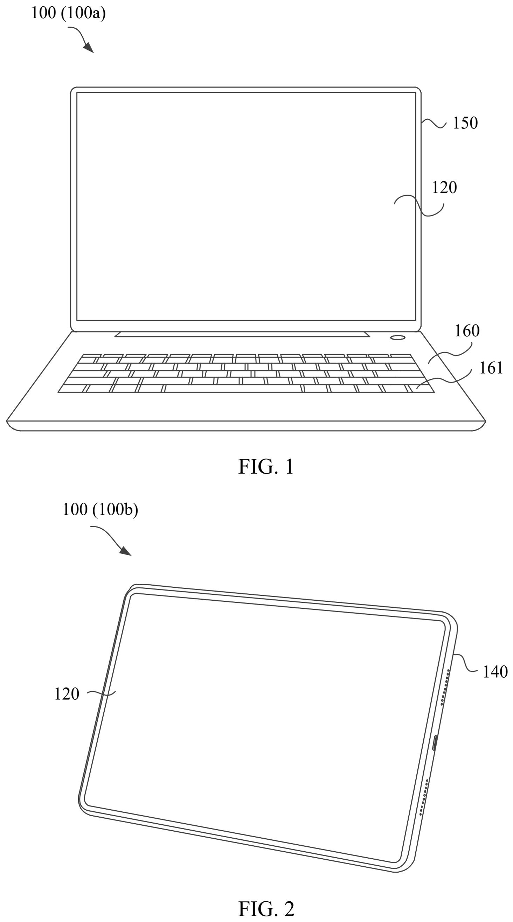

In some examples, as shown in FIG. 1, an electronic device 100 in this embodiment of this application may be described by using a notebook computer 100a as an example. Referring to FIG. 1, the electronic device 100 may include a display screen 120, a first housing 150, and a second housing 160. The display screen 120 is connected to the first housing 150, the first housing 150 and the second housing 160 may be rotatably connected to each other, and the second housing 160 is provided with a keyboard 161. The display screen 120 may be electrically connected to a circuit board arranged in the second housing 160 through a flexible circuit board or a conductive element (not shown). The second housing 160 may further be provided therein with components such as a battery. The first housing 150 and the second housing 160 each may be a metal housing.

In some other examples, as shown in FIG. 2, an electronic device 100 in this embodiment of this application may be described by using a tablet computer 100b as an example. As shown in FIG. 2, the electronic device 100 may include a display screen 120 and an outer housing 140. The display screen 120 and the outer housing 140 are connected and define an internal accommodating cavity. The accommodating cavity may be provided therein with components such as a circuit board and a battery.

In this embodiment of this application, the display screen 120 may be an organic light-emitting diode (Organic Light-Emitting Diode, OLED) display screen 120, or may be a liquid crystal display (Liquid Crystal Display, LCD) screen 120. It should be understood that the display screen 120 may be a touch screen. Further, the display screen 120 may include a display and a touch device. The display is configured to output display content to a user, and the touch device is configured to receive a touch event inputted by the user on the display screen 120.

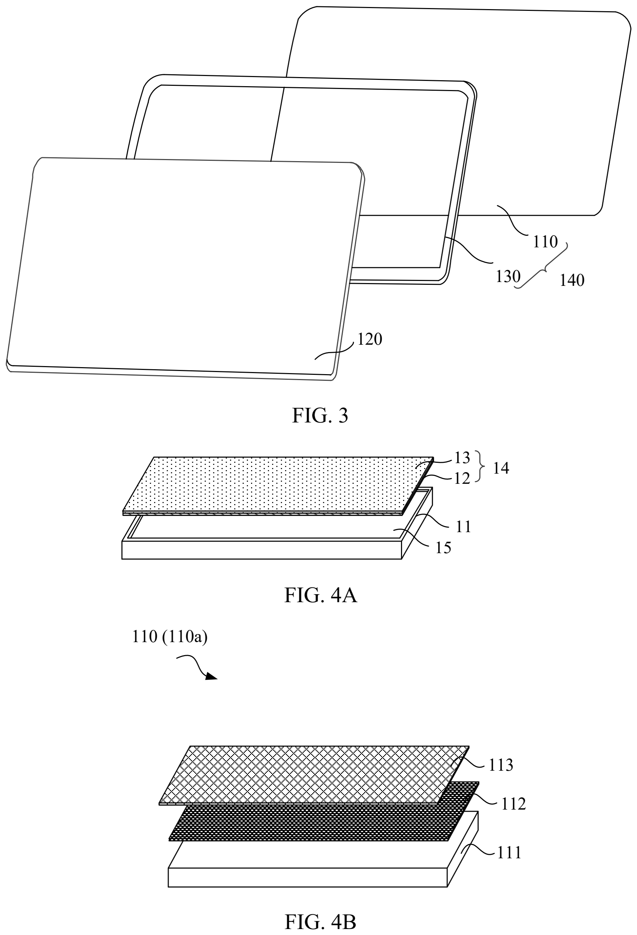

FIG. 3 is an exploded structure of an electronic device 100 (100b). Referring to FIG. 3, the outer housing 140 may include a middle frame 130 and a rear housing 110. The middle frame 130 may be arranged between the display screen 120 and the rear housing 110. The battery may be arranged on a side of the middle frame 130 facing the rear housing 110 (as shown in FIG. 2). The rear housing 110 may be arranged between the middle frame 130 and the rear housing 110, and the rear housing 110 is connected to the middle frame 130. It may be understood that a hollow inner space is defined after the rear housing 110 is connected to the middle frame 130, and the battery may be mounted in the inner space.

The middle frame 130 and the rear housing 110 may be metal pieces.

It should be noted that in some embodiments, the rear housing 110 of the electronic device 100 (for example, the tablet computer 100b) may be connected to the middle frame 130 to form a unibody (Unibody) outer housing 140.

It may be understood that an example structure in this embodiment of this application does not constitute a specific limitation on the electronic device 100. In some other embodiments of this application, the electronic device 100 (for example, the tablet computer 100b) may include more or fewer components than those shown in the figure, or some components may be combined, or some components may be split, or different component arrangements may be used. The components shown in the figure may be implemented by hardware, software, or a combination of software and hardware.

In response to the continuous development of the electronic device 100, an increasingly high requirement is imposed on an appearance of an outer housing (for example, the first housing 150, the second housing 160, or the rear housing 110) of the electronic device 100 (for example, the tablet computer 100b or the notebook computer 100a). In the related art, the outer housing of the electronic device 100 is usually processed by using a metal, such as an aluminum alloy, a stainless steel, or a titanium alloy, or is processed by using a glass fiber board, a composite board, or a polyurethane skin. In recent years, in response to the emergence of an appearance effect of a high bright appearance part of an electronic device and the development trend of exquisite appearance design, an outer housing with higher strength, a higher bright effect, and a metal feeling becomes a development hotspot. However, the outer housing of the electronic device is seriously homogeneous, and abundance of an appearance effect is relatively limited. Questions that not only a high-level appearance of the outer housing of the electronic device can be achieved, but also a cool feeling of the metal outer housing can be maintained may not be satisfied.

FIG. 4A is a schematic structural diagram of a housing of an electronic device. Referring to FIG. 4A, to achieve a texture effect of the housing, the housing includes a metal plate 11 and a thin film sheet 14 with textures arranged on the metal plate 11. During arranging, a thin film sheet 14 with textures is usually prepared in advance. The thin film sheet 14 may be, for example, formed by arranging a textured layer 13 on a bearing layer 12. The bearing layer 12 may be a thin film layer. A side of the metal plate 11 is provided with a groove 15. The thin film sheet 14 is placed in the groove 15, and the thin film sheet 14 and the thin film sheet 14 are pressed and adhered together through a concave-convex mold. In this way, in a manufacturing process, the thin film sheet 14 needs to be prepared in advance, and the thin film sheet 14 and the metal plate 11 are pressed and adhered together through the concave-convex mold, and the process is complex. In addition, when the thin film sheet 14 is arranged in the groove 15 of the metal plate 11, a fit gap is defined between an outer edge of the thin film sheet 14 and a wall of the groove 15, which reduces precision of the housing.

Therefore, to resolve the foregoing problem, an embodiment of this application provides a housing. The housing may be a first housing 150, a second housing 160, an outer housing 140, or a rear housing 110. The housing provided in this embodiment of this application enables an outer housing of an electronic device to have a cool feeling of metal and an outer surface with a dazzling and textured but seamless appearance, which improves appearance richness and competitiveness of a product. A specific structure of the outer housing provided in this embodiment of this application is described below with reference to the accompanying drawings.

Referring to FIG. 4B, a description is provided by using an example in which the housing 110a provided in embodiments of this application is specifically a rear housing 110. As shown in FIG. 4B, the housing 110a may include a metal plate 111, an intermediate layer 112, and a first textured layer 113. The metal plate 111, the intermediate layer 112, and the first textured layer 113 may be arranged in a stack. In this embodiment of this application, the intermediate layer 112 may be located between the metal plate 111 and the first textured layer 113.

The metal plate 111 may have a metal surface, and the intermediate layer 112 may be located on the metal surface of the metal plate 111. In a possible implementation, the first textured layer 113 is connected to the metal surface of the metal plate 111 through the intermediate layer 112. The intermediate layer 112 may be a base layer (for example, a primer layer) that is applied to the metal surface of the metal plate 111. It should be noted that a main composition of the intermediate layer 112 is paint, and a main component of the paint may be a thermoset resin material. It may be understood that the intermediate layer 112 is mainly configured to improve adhesion between the first textured layer 113 and the metal surface of the metal plate 111. It should be noted that the adhesion may be determined by performing a boiling test on the housing 110a. The boiling test may refer to a wet-heat resistance test after painting. For example, the intermediate layer 112 does not fall off after the housing 110a is cooked for two hours in a 98° environment. In this case, it may be determined that the adhesion reaches a standard. In addition, in a possible implementation manner, a color of the intermediate layer 112 may be black, so that the intermediate layer 112 can have a function of shielding a natural color of the metal surface of the metal plate 111.

Based on the foregoing embodiments, the intermediate layer 112 may be a base layer on which paint is applied to the metal surface of the metal plate 111, and may be obtained through a thermal curing process. The composition of the paint may include acrylic resin having a weight percentage of at least 80%. For example, the composition of the intermediate layer 112 includes acrylic resin having a weight percentage of at least 80%.

A manufacturing process of the intermediate layer 112 may be a spraying method. Paint is applied to the metal surface of the metal plate 111, and is baked and solidified on the metal surface of the metal plate 111, so as to shield the natural color of the metal plate 111 and serve as a background color. Based on an effect requirement of the rear housing 110 of the tablet computer, the intermediate layer 112 may be formed through coating and baking a plurality of times, for example, coating and baking twice, coating and baking three times, coating and baking four times, or coating and baking five times.

In a possible implementation, the acrylic resin may be obtained through reaction of modified acrylic resin having a weight percentage in a range of 60% to 90% and polyester acrylic resin having a weight percentage in a range of 10% to 40%. For example, the acrylic resin may be obtained through reaction of the modified acrylic resin and the polyester acrylic resin, and a ratio of the parts of the modified acrylic resin and the polyester acrylic resin may be (6-9):(1-4). For example, a ratio of the parts of the modified acrylic resin and the polyester acrylic resin may be 9:1 or 7:3. The modified acrylic resin includes silane-modified acrylic ester and/or hydroxypropyl-modified acrylic ester. The silane-modified acrylic ester is obtained through reaction by adding the silane modified agent into the acrylic resin, and the hydroxypropyl-modified acrylic ester is obtained through reaction by adding a hydroxypropyl resin modified agent into the acrylic resin. In this embodiment of this application, the modified acrylic resin is obtained through modification by adding a silane additive or the hydroxypropyl resin into the acrylic resin.

Based on the foregoing embodiments, the intermediate layer 112 may further include an additive. The additive may include a colorant, a filler, and the like.

Based on the foregoing embodiments, the intermediate layer 112 is a film layer that is formed by: mixing the modified acrylic resin having a weight percentage in the range of 60% to 90%, the polyester acrylic resin having a weight percentage in the range of 10% to 40%, a curing agent, and the additive, applying a mixture to the metal plate 111, and performing thermal curing. It should be noted that during the thermal curing process, the modified acrylic resin and the polyester acrylic resin are dissolved into a solvent (a diluent), the curing agent and the additive are added into the solvent for mixing, and then the mixture is applied to the metal plate 111 for heating and curing. In this way, during the entire heating process, monomers of the modified acrylic resin and the polyester acrylic resin interlace and react with each other, to form a macromolecular film.

It should be noted that the first textured layer 113 may implement different texture colors and lighting effects. For example, the texture that may be formed includes, but is not limited to, a CD texture (an effect similar to a texture of a CD optical disc obtained by removing a material on a metal surface by using a precise CD texturing machine), diamond texture, three-dimensional texture, or the like.

Based on the foregoing embodiments, the first textured layer 113 may be a UV layer with textures by spraying a UV adhesive with the polyurethane acrylic resin as a main body on the surface, then adhering a sheet with a texture structure to the surface, and then curing by light, so as to achieve different visual and tactile effects. Therefore, in this embodiment of this application, the first textured layer 113 may include the UV adhesive layer and the sheet with a texture structure. The UV adhesive layer is made of an adhesive whose main body is the polyurethane acrylic resin.

In a possible implementation, a manufacturing process of the first textured layer 113 may be applying through spraying, silk screen printing, or flow coating, covering the sheet with a texture structure to perform rubbing, and then curing by light. The first textured layer 113 may be obtained through reaction by mixing a prepolymer, a solvent, a curing agent, and an additive. It should be noted that the first textured layer 113 is a film layer formed by mixing the modified acrylic resin having a weight percentage in the range of 60% to 90%, the polyester acrylic resin having a weight percentage in the range of 10% to 40%, the solvent, the curing agent, and the additive, and performing thermal curing. In addition, the prepolymer in the first textured layer 113 may be polyurethane acrylic resin, polyester acrylic resin, or epoxy acrylic resin. In this embodiment of this application, the prepolymer in the first textured layer 113 may be prepared by using polyurethane acrylic resin, and a content ratio of the prepolymer may be approximately 40% to 65%. In addition, the additive needs to be added with a wear-resisting additive, an AF additive, and the like, so as to improve wear-resisting property, hardness, and oil-resistant property thereof.

In this embodiment of this application, the first textured layer 113 may be an outer textured layer, to achieve an effect of a frosted feeling. The outermost textured layer in the film layer structure may be the outer textured layer.

Therefore, according to the housing 110a provided in this embodiment of this application, the intermediate layer 112 may be arranged on a metal surface of the metal plate 111, and the first textured layer 113 with textures and a color is further arranged on the intermediate layer 112, so as to directly form a laminated appearance with textures and colors on the metal surface of the metal plate 111, thereby avoiding preparing a textured sheet in advance and simplifying the process.

In this embodiment of this application, the intermediate layer 112 and the first textured layer 113 with textures and colors are printed on the metal surface of the metal plate 111 through a layering process, thereby achieving an effect of seamless precision between the metal plate 111, the intermediate layer 112, and the first textured layer 113, and avoiding a problem in the related art that the prepared thin film sheet 14 is arranged in the groove 15 of the metal plate 11, resulting in a fit gap between an outer edge of the thin film sheet 14 and a wall of the groove 15 and reducing precision of the housing. Therefore, according to the housing 110a provided in this embodiment of this application, a seamless fit between all layer structures on the outer surface of the housing 110a is implemented, thereby improving the precision of the housing 110a.

Therefore, the housing 110a provided in this embodiment of this application has an effect of a cool feeling of metal and an outer surface with a dazzling and textured but seamless appearance, which improves appearance richness and competitiveness of a product, thereby resolving a problem that the metal housing in an existing tablet computer cannot have a cool feeling of metal and an outer surface with a dazzling and textured but seamless appearance.

To further achieve the effect that the rear housing 110 of the tablet computer has a cool feeling of metal and an outer surface with a dazzling and textured but seamless appearance, so that the outer surface of the rear housing 110 of the tablet computer has a more dazzling and textured appearance, this embodiment of this application may further provide a housing 110a whose surface has a stacked structure. The specific structure of the housing 110a provided in this embodiment of this application is described below with reference to the accompanying drawings.

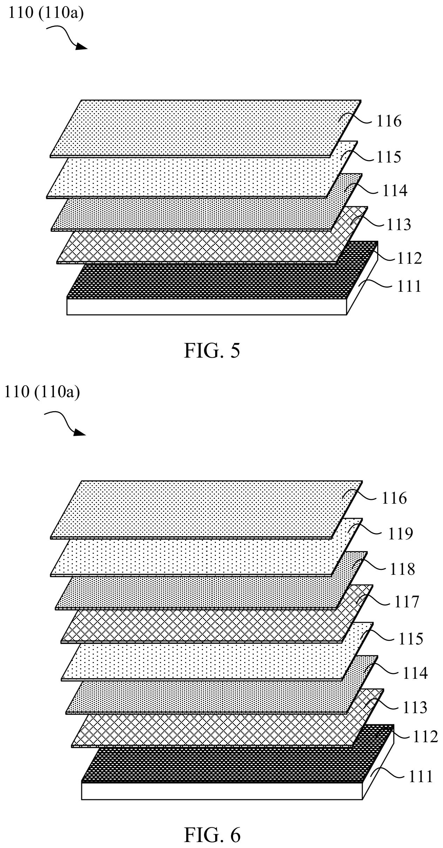

In a possible implementation, referring to FIG. 5, based on the foregoing embodiments, the housing 110a may further include a first coating layer 114. The first coating layer 114 may be located on a side of a first textured layer 113 facing away from an intermediate layer 112. It should be noted that the first coating layer 114 may be prepared through an optical physical vapor deposition (Optical Physical Vapor Deposition, OPVD) process, and a main function of the first coating layer 114 is to achieve a metal luster effect, and a color and lighting effect. Specifically, a thickness of the first coating layer 114 is determined based on an appearance effect.

Based on the foregoing embodiments, a manufacturing process of the first coating layer 114 may adopt a method such as electron gun evaporation or magnetron sputtering, to deposit a target material on the surface of the first textured layer 113, thereby achieving a better luster effect. In a possible implementation, the first coating layer 114 may be a multilayer oxide film system structure. For example, in some examples, the first coating layer 114 may include one or more of SiO, ZrO₂, Ti₃O₅, and SiO₂. The film system structure may be adjusted based on an ID effect.

Based on the foregoing embodiments, a surface of the first coating layer 114 may have a metal luster effect. In a possible implementation, the main composition of the first coating layer 114 may be a metal oxide. This is not limited in this embodiment of this application herein. The first coating layer 114 has different colors through a refractive index of the first coating layer 114, and the first coating layer 114 can transmit light, thereby achieving a light reflection effect.

Based on the foregoing embodiments, because the first textured layer 113 has different texture colors and lighting effects, the first coating layer 114 can have different colors through the refractive index. It should be noted that the first coating layer 114 does not cover the color of the first textured layer 113. In addition, the first textured layer 113 and the first coating layer 114 can jointly achieve a required color effect.

Still referring to FIG. 5, based on the foregoing embodiments, the housing 110a may further include a hardened layer 116 and a first connecting layer 115. The first connecting layer 115 may be located between the first coating layer 114 and the hardened layer 116. In a possible implementation, the first connecting layer 115 may be configured to connect the first coating layer 114 to the hardened layer 116. A main composition of the first connecting layer 115 may be any one of polyurethane, polyester, and epoxy resin, and the first connecting layer 115 may be prepared through a thermal curing process. In this embodiment of this application, the first connecting layer 115 may be prepared by selecting the epoxy resin. It may be understood that the first connecting layer 115 is mainly configured to connect the first coating layer 114 to the hardened layer 116.

Based on the foregoing embodiment, the first connecting layer 115 is arranged between the first coating layer 114 and the hardened layer 116. The first connecting layer 115 may have an adhesive function, so that the first connecting layer 115 can bear the first coating layer 114 and the hardened layer 116. In a possible implementation, the first connecting layer 115 may be configured as a LOGO layer or an ink layer. When the first connecting layer 115 is the ink layer, the first connecting layer 115 may include a solvent, so that the first connecting layer 115 may generate a chemical bond, and can better stick and bear the first coating layer 114 and the hardened layer 116 in combination with a chemical action.

A manufacturing process of the first connecting layer 115 may be a spraying method or a silk screen printing method. Ink is applied to the first coating layer 114, and then baking and curing is performed to obtain the first connecting layer 115, which bears the first coating layer 114 and the hardened layer 116.

Based on the foregoing embodiment, the hardened layer 116 may include at least one of a hardened layer with textures and a hard film layer without textures. The hardened layer with textures in the hardened layer 116 may be a UV outer textured layer. In a possible implementation, a main composition of the hardened layer 116 may be an adhesive, and a specific structure of the hardened layer 116 may be similar to that of the first textured layer 113. It should be noted that a hardness of the hardened layer 116 is greater than a hardness of the first textured layer 113. In this embodiment of this application, the hardened layer 116 may include a UV adhesive layer and a solvent. The UV adhesive layer is made of an adhesive whose main body is the polyurethane acrylic resin.

Based on the foregoing embodiment, different hardened layers 116 may be selected based on a desired appearance effect. In an example, if a frosted effect and a touch appearance effect are required, a hardened layer 116 with textures may be selected. If an appearance effect of a bright surface or a matte effect and a relatively smooth touch is required, a hardened layer 116 without textures may be selected.

Therefore, based on the foregoing embodiment, the stacked structure of the first textured layer 113 and the first coating layer 114 is used, which better satisfies a color effect of the rear housing 110 of the tablet computer. The housing 110a provided in this embodiment of this application has an effect of a cool feeling of metal and an outer surface with a dazzling and textured but seamless appearance, which improves appearance richness and competitiveness of a product, thereby resolving a problem that the metal rear housing 110 in an existing tablet computer cannot have a cool feeling of metal and an outer surface with a dazzling and textured but seamless appearance.

To further achieve the effect that the rear housing 110 of the tablet computer has a cool feeling of metal and an outer surface with a dazzling and textured but seamless appearance, so that the outer surface of the rear housing 110 of the tablet computer has a more dazzling and textured appearance, this embodiment of this application may further provide a housing 110a whose surface has a stacked structure. The specific structure of the housing 110a provided in this embodiment of this application is described below with reference to the accompanying drawings.

In a possible implementation, referring to FIG. 6, based on the foregoing embodiments, the housing 110a may further include a second textured layer 117. The second textured layer 117 may be located between the first connecting layer 115 and the hardened layer 116. It should be noted that a manufacturing process of the second textured layer 117 may be the same as the manufacturing process of the first textured layer 113. The second textured layer 117 may also be a UV layer with textures by spraying a UV adhesive with the polyurethane acrylic resin as a main body on the surface, then adhering a sheet with a texture structure to the surface, and then curing by light, so as to achieve different visual and tactile effects. Therefore, in this embodiment of this application, the second textured layer 117 may further include the UV adhesive layer and the sheet with a texture structure. The UV adhesive layer is made of an adhesive whose main body is the polyurethane acrylic resin.

In a possible implementation, a manufacturing process of the second textured layer 117 may be applying through spraying, silk screen printing, or flow coating, covering the sheet with a texture structure to perform rubbing, and then curing by light. The components of the second textured layer 117 may include a prepolymer, a solvent, a curing agent, and an additive. It should be noted that the prepolymer may select polyurethane acrylic resin, polyester acrylic resin, and epoxy acrylic resin. In this embodiment of this application, the prepolymer in the second textured layer 117 may be prepared by selecting the polyurethane acrylic resin, and a content ratio of the prepolymer may be approximately 40% to 65%. In addition, the additive needs to be added with a wear-resisting additive, an AF additive, and the like, so as to improve wear-resisting property, hardness, and oil-resistant property thereof.

It should be noted that compared with the first textured layer 113, the second textured layer 117 has a different polyurethane acrylic resin system. The second textured layer 117 may also implement different texture colors and lighting effects. For example, the texture that may be formed includes, but is not limited to, a CD texture (an effect similar to a texture of a CD optical disc obtained by removing a material on a metal surface by using a precise CD texturing machine), diamond texture, three-dimensional texture, or the like.

In this embodiment of this application, the first textured layer 113 may be an inner textured layer, to achieve a lighting and color effect, and the second textured layer 117 may be an outer textured layer, to achieve an effect of a frosted feeling. The outermost textured layer in the film layer structure may be an outer textured layer, and an inner textured layer in the film layer structure may be an inner textured layer. The first textured layer 113 and the second textured layer 117 have different textures.

In a possible implementation, still referring to FIG. 6, based on the foregoing embodiment, the housing 110a may further include a second coating layer 118. The second coating layer 118 may be located between the second textured layer 117 and the hardened layer 116. It should be noted that a manufacturing process of the second coating layer 118 may be the same as the manufacturing process of the first coating layer 114. The second coating layer 118 may also be prepared through an optical physical vapor deposition (Optical Physical Vapor Deposition, OPVD) process, and a main function of the second coating layer 118 is to achieve a metal luster effect and a color and lighting effect as well. Specifically, a thickness of the second coating layer 118 is determined based on an appearance effect.

Based on the foregoing embodiments, a manufacturing process of the second coating layer 118 may also adopt a method such as electron gun evaporation or magnetron sputtering, to deposit a target material on the surface of the second textured layer 117, thereby achieving a better luster effect. In a possible implementation, the second coating layer 118 may be a multilayer oxide film system structure. For example, in some examples, the second coating layer 118 may include one or more of SiO, ZrO₂, Ti₃O₅, and SiO₂. The film system structure may be adjusted based on an ID effect.

Based on the foregoing embodiments, a surface of the second coating layer 118 may have a metal luster effect. In a possible implementation, the main composition of the second coating layer 118 may also be a metal oxide. This is not limited in this embodiment of this application herein. The second coating layer 118 has different colors through a refractive index of the second coating layer 118, and the second coating layer 118 can transmit light, thereby achieving a light reflection effect.

Based on the foregoing embodiments, because the second textured layer 117 has different texture colors and lighting effects, the second coating layer 118 can have different colors through the refractive index. It should be noted that the second coating layer 118 does not cover the color of the second textured layer 117. In addition, the second textured layer 117 and the second coating layer 118 can jointly achieve a desired color effect. Still referring to FIG. 6, based on the foregoing embodiment, the housing 110a may further include a second connecting layer 119. The second connecting layer 119 may be located between the second coating layer 118 and the hardened layer 116. In a possible implementation, the second connecting layer 119 may be configured to connect the second coating layer 118 to the hardened layer 116. It should be noted that a composition of the second connecting layer 119 may be the same as that of the first connecting layer 115. A main composition of the second connecting layer 119 may also be any one of polyurethane, polyester, and epoxy resin, and the second connecting layer 119 may be prepared through a thermal curing process. It may be understood that the second connecting layer 119 is mainly configured for connecting the second coating layer 118 to the hardened layer 116.

Based on the foregoing embodiment, the second connecting layer 119 is arranged between the second coating layer 118 and the hardened layer 116. The second connecting layer 119 may have an adhesive function, so that the second connecting layer 119 can bear the second coating layer 118 and the hardened layer 116. In a possible implementation, the second connecting layer 119 may be configured as a LOGO layer or an ink layer. When the second connecting layer 119 is the ink layer, the second connecting layer 119 may include a solvent, so that the second connecting layer 119 may generate a chemical bond, and can better stick and bear the second coating layer 118 and the hardened layer 116 in combination with a chemical action.

A manufacturing process of the second connecting layer 119 may also be a spraying method or a silk screen printing method. Ink is applied to the second coating layer 118, and then baking and curing is performed to obtain the second connecting layer 119, which bears the second coating layer 118 and the hardened layer 116.

Therefore, based on the foregoing embodiment, a stacked structure of two textured layers and two coating layers is used, which further satisfies a color effect of the rear housing 110 of the tablet computer. The housing 110a provided in this embodiment of this application also has an effect of a cool feeling of metal and an outer surface with a dazzling and textured but seamless appearance, which improves appearance richness and competitiveness of a product, thereby resolving a problem that the metal housing in an existing tablet computer cannot have a cool feeling of metal and an outer surface with a dazzling and textured but seamless appearance.

In a possible implementation, a thickness of the intermediate layer 112 is in a range of 10 µm to 35 µm. For example, the thickness of the intermediate layer 112 may be 11 µm or 34 µm.

In a possible implementation, a thickness of the second textured layer 117 and the first textured layer 113 is in a range of 10 µm to 25 µm. The second textured layer 117 and the first textured layer 113 may have the same thickness or different thicknesses. For example, the thickness of the second textured layer 117 and the first textured layer 113 may be 11 µm or 24 µm.

In a possible implementation, a thickness of the hardened layer 116 is in a range of 10 µm to 25 µm. The thickness of the hardened layer 116 may be 11 µm or 24 µm.

In a possible implementation, a thickness of the second coating layer 118 and the first coating layer 114 is in a range of 50 nm to 150 nm. The second coating layer 118 and the first coating layer 114 may have the same thickness or different thicknesses. For example, the thickness of the second coating layer 118 and the first coating layer 114 may be 60 nm or 140 nm. In a possible implementation, when it is required that the second coating layer 118 and the first coating layer 114 have a relatively large thickness, the thickness of the second coating layer 118 and the first coating layer 114 may be in a range of 300 nm to 500 nm. For example, the second coating layer 118 and the first coating layer 114 may have a thickness of 310 nm or 490 nm.

In a possible implementation, a thickness of the second connecting layer 119 and the first connecting layer 115 is in a range of 6 µm to 10 µm. The second connecting layer 119 and the first connecting layer 115 may have the same thickness or different thicknesses. For example, the thickness of the second connecting layer 119 and the first connecting layer 115 may be 7 µm or 9 µm.

The first coating layer 114 and the second coating layer 118 may include one or more of SiO, ZrO₂, Ti₃O₅, and SiO₂.

In this embodiment of this application, the housing 110a may further include a LOGO layer (not shown). The LOGO layer may be located between the first coating layer 114 and the hardened layer 116, or may be located between the second coating layer 118 and the hardened layer 116. The LOGO layer may be combined with the first connecting layer 115 or the second connecting layer 119 to form a layer structure.

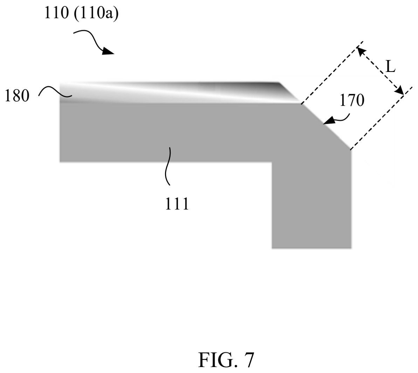

When the housing 110a provided in this embodiment of this application is applied to the electronic device 100, referring to FIG. 7, an outer edge of the housing 110a has a chamfered plane 170. Referring to FIG. 7, a corresponding width L of the chamfered plane 170 in the metal layer is greater than or equal to 0.5 mm and less than or equal to 3 mm. For example, the width L may be 1 mm or 2 mm.

It may be understood that the stacked structure 180 in FIG. 7 may be a stacked structure formed by the intermediate layer 112 and the first textured layer 113, may be a stacked structure formed by the intermediate layer 112, the first textured layer 113, the first coating layer 114, the first connecting layer 115, and the hardened layer 116, or may be a stacked structure formed by the intermediate layer 112, the first textured layer 113, the first coating layer 114, the first connecting layer 115, the second textured layer 117, the second coating layer 118, the second connecting layer 119, and the hardened layer 116.

During the manufacturing process of the housing 110a, when each layer structure (for example, the intermediate layer 112, the first textured layer 113, the first coating layer 114, the first connecting layer 115, or the hardened layer 116) is applied to the metal plate 111, an adhesive overflow may occur at a place in which two surfaces of the housing 110a interact. To ensure an aesthetic appearance of the housing 110a, a part of the housing 110a in which the adhesive overflow occurs may be cut out to form the chamfered plane 170. By arranging the chamfered plane 170, redundant adhesive overflow may be removed without affecting the appearance of the housing 110a. In addition, anodizing treatment may be performed on the chamfered plane 170, so as to avoid that the chamfered plane 170 after the adhesive overflow is removed is easily eroded, and improve metal hardness, wear resistance, and precision.

It may be understood that, in some examples, as shown in FIG. 7, the chamfered plane 170 extends on all of the metal plate 111, the intermediate layer 112, and the first textured layer 113, so that a highlighted chamfered plane is located at the chamfered plane 170. Therefore, in this embodiment of this application, by including the foregoing housing 110a and cooperating with the highlighted chamfered plane 170, the rear housing 110 has a cool feeling of metal and an outer surface with a dazzling and textured but seamless appearance, which improves appearance richness and competitiveness of a product.

In the descriptions of embodiments of this application, it should be noted that unless otherwise explicitly specified and defined, the terms "mount", "connected", and "connection" should be understood in a broad sense. For example, the connection may be a fixed connection, an indirect connection through an intermediary, internal communication inside two elements, or an interaction relationship between two elements. A person of ordinary skill in the art may understand specific meanings of the foregoing terms in embodiments of this application based on a specific situation.

The terms such as "first", "second", "third", and "fourth" (if any) in the specification and claims of this application and in the foregoing accompanying drawings are used for distinguishing similar objects and not necessarily used for describing any particular order or sequence.

## Claims

1. A housing, comprising a metal plate, an intermediate layer, and a first textured layer that are arranged in a stack, wherein the intermediate layer is located between the metal plate and the first textured layer; and
the intermediate layer comprises acrylic resin having a weight percentage of at least 80%.

2. The housing according to claim 1, wherein the acrylic resin is obtained through reaction of modified acrylic resin having a weight percentage in a range of 60% to 90% and polyester acrylic resin having a weight percentage in a range of 10% to 40%; and
the modified acrylic resin comprises silane-modified acrylic ester and/or hydroxypropyl-modified acrylic ester.

3. The housing according to claim 1 or 2, wherein the intermediate layer further comprises an additive, and the additive comprises a colorant and a filler.

4. The housing according to claim 3, wherein the intermediate layer is formed by: mixing the modified acrylic resin having a weight percentage in the range of 60% to 90%, the polyester acrylic resin having a weight percentage in the range of 10% to 40%, a curing agent, and the additive, applying a mixture to the metal plate, and performing thermal curing.

5. The housing according to any one of claims 1 to 4, further comprising a first coating layer, wherein the first coating layer is located on a side of the first textured layer facing away from the intermediate layer.

6. The housing according to claim 5, further comprising a hardened layer and a first connecting layer, wherein the first connecting layer is located between the first coating layer and the hardened layer; and
the first connecting layer is configured to connect the first coating layer to the hardened layer.

7. The housing according to claim 6, further comprising a second textured layer, wherein the second textured layer is located between the first connecting layer and the hardened layer.

8. The housing according to claim 7, further comprising a second coating layer, wherein the second coating layer is located between the second textured layer and the hardened layer.

9. The housing according to claim 8, further comprising a second connecting layer, wherein the second connecting layer is located between the second coating layer and the hardened layer.

10. The housing according to any one of claims 7 to 9, wherein the first textured layer, the second textured layer, and the hardened layer each are a UV adhesive layer, and the UV adhesive layer comprises polyurethane acrylic resin.

11. The housing according to any one of claims 6 to 9, wherein the hardened layer comprises at least one of a UV textured layer with textures and a hard film layer without textures, and a hardness of the hardened layer is greater than a hardness of the first textured layer.

12. The housing according to claim 9, wherein the first connecting layer and the second connecting layer each are an adhesion layer formed by any one of polyurethane, polyester, and epoxy resin.

13. The housing according to any one of claims 1 to 12, wherein a thickness of the intermediate layer is in a range of 10 µm to 35 µm.

14. The housing according to any one of claims 7 to 9, wherein a thickness of the second textured layer and the first textured layer is in a range of 10 µm to 25 µm.

15. The housing according to any one of claims 6 to 9, wherein a thickness of the hardened layer is in a range of 10 µm to 25 µm.

16. The housing according to claim 8, wherein a thickness of the second coating layer and the first coating layer is in a range of 50 nm to 150 nm.

17. The housing according to claim 9, wherein a thickness of the second connecting layer and the first connecting layer is in a range of 6 µm to 10 µm.

18. The housing according to claim 8 or 9, wherein the first coating layer and the second coating layer comprise one or more of SiO, ZrO₂, Ti₃O₅, and SiO₂.

19. The housing according to any one of claims 1 to 12, wherein an outer edge of the housing has a chamfered plane.

20. The housing according to claim 19, wherein the chamfered plane extends on all of the metal plate, the intermediate layer, and the first textured layer.

21. The housing according to claim 20, wherein a corresponding thickness of the chamfered plane in the metal layer is greater than or equal to 0.5 mm and less than or equal to 3 mm.

22. An electronic device, comprising the housing according to any one of claims 1 to 21.

23. The electronic device according to claim 22, comprising a display screen and a middle frame, wherein the middle frame is arranged between the display screen and the housing, and a side of the metal plate of the housing facing away from the metal plate faces the middle frame.

24. The electronic device according to claim 22 or 23, wherein the electronic device is a tablet computer.
